Europäisches Patentamt

European Patent Office

Office européen des brevets

(11) Publication number: **0 142 688 B1**

## EUROPEAN PATENT SPECIFICATION

(45) Date of publication of patent specification: **10.07.91**

(51) Int. Cl.⁵: **A23L 3/36**, G06K 19/00, F25B 49/00

(21) Application number: **84111921.7**

(22) Date of filing: **04.10.84**

(54) Improved refrigerating device.

(30) Priority: **21.10.83 IT 6808483**

(43) Date of publication of application:
**29.05.85 Bulletin 85/22**

(45) Publication of the grant of the patent:
**10.07.91 Bulletin 91/28**

(84) Designated Contracting States:
**DE FR GB NL SE**

(56) References cited:
EP-A- 0 074 470     EP-A- 0 090 431
DE-A- 1 524 449     DE-A- 2 709 081
FR-A- 1 536 987     FR-A- 2 025 425
FR-A- 2 492 073     US-A- 3 478 316
US-A- 3 935 427

BBC-NACHRICHTEN, vol. 53, no. 5-6, May-
June 1971, Mannheim (DE); K.SCHLEICHER
et al.: "Zentralelektroniken automatischer
Hochregallager", pp. 150-159

BBC NACHRICHTEN, vol. 53, no. 7-8, July-
August 1971, Mannheim (DE); G. FLOTHO et
al.: "Einsatz von DP 700 zur Automatisierung
in der Lagertechnik", pp. 208-217

(73) Proprietor: **INDESIT INDUSTRIA ELET-
TRODOMESTICI ITALIANA S.p.A.
Corso Vittorio Emanuele II, 72
I-10128 Turin(IT)**

(72) Inventor: **Chiapparino, Aldo
Via Domenico Fontana 184
Napoli(IT)**
Inventor: **Canarutto, Claudio
Via Ridolfi 48
San Mauro (Turin)(IT)**

(74) Representative: **Gustorf, Gerhard, Dipl.-Ing.
Patentanwalt Dipl.-Ing. Gerhard Gustorf
Bachstrasse 6 A
W-8300 Landshut(DE)**

PATENTS ABSTACTS OF JAPAN, vol. 7, no. 20, (M-188) [1165], 26 Jan 1983

ELEKTRONISCHE DATENVERARBEITUNG, vol. 11, no. 8, August 1969, Braunschweig (DE); H.F.W.SCHRAMM: "Datenerfassung - ein Engpass?", pp. 379-386

AUTOMATIK, vol. 14, no.12, December 1969, Bad Wörishofen (DE); E.KARG: "Datenverarbeitung bei der Energie- und Wärmewirtschaft für dieKlimatisierungs- und Versorgungstechnik", pp. 446-449

## Description

The present invention relates to an improved refrigerating device for the keeping of foods.

The present refrigerators and in particular deep-freezers are provided with devices assuring the maintenance of the correct temperature for the keeping of foods, or that in case of lack of electrical energy signal the event of the user, signalling also the maximum temperature reached inside the deep-freezers, so that the user may decide accordingly about the foods contained inside it, or also that notify the user in case he has let the hatch of the deep-freezer open.

It is also known that the different kinds of foods have different times of keeping; consequently at the term of said times the foods have to be eaten. But in the present deep-freezers no direct information is given to the user about the lenght of time for which the different foods may be still kept and about the terms of these ones, apart from a general information written in the inner part of the device or of the instruction booklet. Consequently there is the risk that a not very careful user may let the foods deteriorate, whereas a careful user, if does not want let deteriorate the foods kept, is compelled to continuous inspections, with remarkable energy losses, due to the opening of the door of the room and/or to the removal of the small packets, for reading the date of the beginning of the keeping and dangers of damages of said foods that are handled. Besides said user is compelled to bring up to date an agenda of inlet and outlet of foods inside and outside the deep-freezing device.

Thus aim of the present invention is to overcome the abovesaid drawbacks and to suggest an improved refrigerating device notifying the user, eventually in advance, about the term of the foods kept in the deep-freezer, allowing a consultation of the keeping times still useful for the different foods without needing to open the door of the deep-freezer and without having to handle the foods kept and recording automatically the insertion and the removal of foods.

Further aims of the present invention are to obtain a better working of the deep-freezing device in respect of the known technique and to supply the user with other useful information such as the temperature inside the deep-freezing device, the hour, the date, etc.

With these aims in view the present invention relates to an improved refrigerating device for the keeping of foods, characterized in that it includes means for the acquisition of external information by which it receives data about the kinds of foods which are kept inside it, timers measuring the passing of time, in particular starting from the date in which food was kept, means for processing information that process the data received from the means for the acquisition of the external data and those ones coming from timers, and means for the communication of information outward, that according to the result of the processed data supply the user with information about the time of keeping of the differents foods and/or about their term;

Further aims and advantages of the present invention will result clear from the following detailed description and from the attached drawings given as an explanatory and non-restrictive example in which:

figure 1 shows an approximate table indicating the maximum time of keeping for a certain number of foods of large consumption.

figure 2 shows a key with distinctive drawings used in the improved refrigerating device being subject of the present invention,

figure 3 shows the control board of the improved refrigerating device being subject of the present invention,

figure 4 shows a particular of the control board indicated in the previous figure and

figure 5 shows a block diagram of the control electric circuit used in the improved refrigerating device being subject of the present invention.

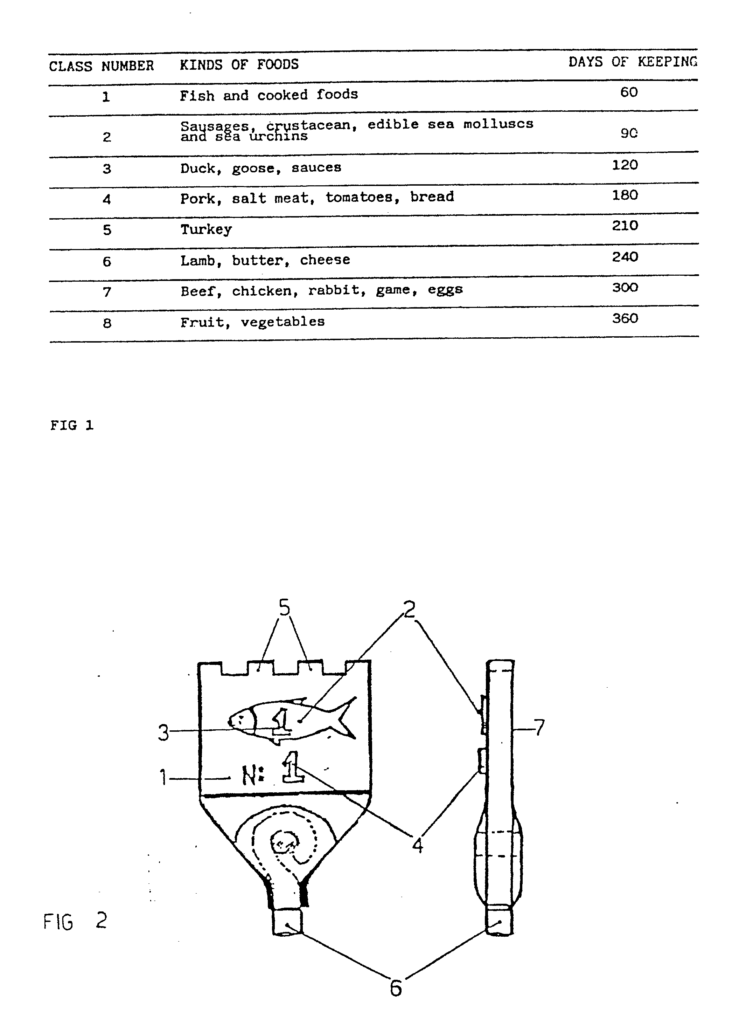

Figure 1 shows a general table including different kinds of food that have been grouped in eight classes according to the maximum period of keeping. For example we may note that fish is included in class 1 and has a cautious maximum period of keeping of 60 days, or that the lamb is included in class 6 and has a cautious maximum period of keeping of 240 days. The foods have been grouped in eight classes as this represents the right compromise between a correct keeping of the different kinds of foods and a practical utilization of the deep-freezers, but obviously the different kinds of foods might be grouped in a larger or smaller number of classes.

In figure 2 we can note a key with distinctive drawing 1 presenting on one of his surfaces an embossed drawing 2, a first number 3 inside the drawing 2 and a second number 4. The drawing 2 represents the main food of one of the eight classes in which the different kinds of food have been grouped, whereas the first number 3 shows a number "n" related to the same class of food to which the food indicated in the drawing 2 belongs. The second number 4 on the other hand shows a progressive number "m" referred to the packet or to the group of packets of the foods of a determined class. In the preferred solution said number may change from 1 to 4, i.e. 4 different groups of packets of food are provided for each class of foods. The figure shows the packet number 1 of the class 1, in which the main food is fish. The drawing 2, the first number 3 and the second number 4 are embossed for permitting also to blind persons to read easily. In a first variation the first number 3 or the drawing 2 might miss but the key with distinctive drawing 1 does not result for this reason less clear to the user, in a second variation said drawings and numbers may be replaced by any symbol or code, whereas in a third variation said drawings, numbers, symbols or codes instead of being embossed might be replaced or completed with a code that can be read by blind persons, for example the Braille code. On the upper end of the key with distinctive drawing 1 there is a "battlement" 5 obtained according to a prefixed identification code that, in said code, represents the class of foods and the number of the packet or of the group of packets of the foods of said class to which the key with distinctive drawing will be associated. The codification provided is of mechanical type, but other kinds of codes such as for example codes with magnetic or optical reading are foreseen. In the preferred solution, considering that the different kinds of foods have been grouped in 8 classes and that for each class 4 different groups of packets of foods are provided, 32 "combinations" will be sufficient and consequently 5 elements for the battlement 5. The presence or the absence of one of the elements in its place represents the basic date of the codification. Besides, for avoiding false identifications of objects that are not a key with distinctive drawing 1 two identification elements are provided at the ends of the battlement 5, that so presents totally 7 elements. The key with distinctive drawing 1 presents also in its lower end a big pin 6, showed in the figure only in its upper part, that is used for the hooking of the key with distinctive drawing 1 to the packet or to the group of packets of foods to which it has to be associated. Also in this case other kinds of hooking of the key with distinctive drawing 1 to the packet or to the groups of packets of foods may be provided, such as for example snap hooks etc. At last on the other surface of the key with distinctive drawing 1 a free space 7 is provided, for permitting to the user to use it for his possible notes or personal labels.

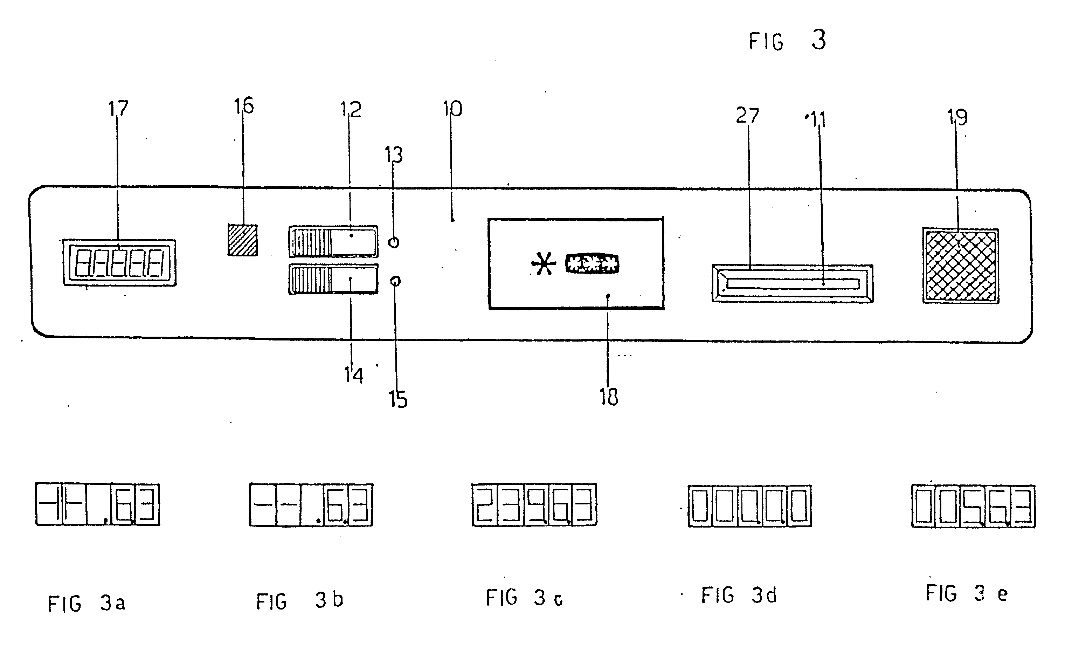

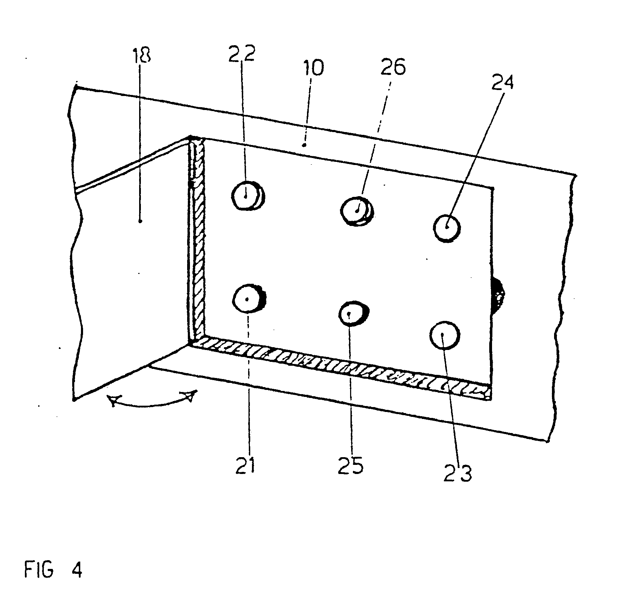

In figure 3 we may note a warning and control board 10 placed on the instrument board of a refrigerating device provided with a deep-freezer, presenting a reader 11 of the code of identification of the key with distinctive drawing 1 including a slot 27, through which the key with distinctive drawing 1 shown in the previous figure is inserted, and a set of micro-switches, not visible in the figure, that are closed or not according to the combination of the battlement 5 of the key with distinctive drawing 1, that change its mechanical code in a code of electrical signals. Obviously if the kind of code on the key with distinctive drawing 1 were of optical or magnetic kind also the reader 11 of the slot 27 would be of optical and magnetic kind. The warning and control board 10 presents also a mains switch 12; a first light emitting diode 13, in particular green light, that lights when the switch 12 is off; a pre-freezing switch 14; a second light emitting diode 15, in particular yellow light, associated to the pre-freezing switch 14; a research key 16; an element for data visualization 17, consisting for example of 5 displays with seven segments, different outlines of which in the different working conditions are showed in figures from 3a to 3e; a hatch 18, under which different keys are provided whose function will be described more in detail in figure 4 and a loudspeaker placed behind the grid 19. The element 17 may be made of any kind of signalling components, such as light emitting diodes, liquid crystals displays or other kinds of digital, alphanumeric or dot matrix displays.

Figure 4, in which the same elements of the previous figures are indicated with the same numbers, we can note a first key 21, for the choice of the hour; a second key 22, for the choice and the visualization of the date; a third key 23 for the visualization of the temperature inside the deepfreezers; a fourth key 24 for the reset of the system for keeping foods, a fifth key 25 and a sixth key 26, that are used for up-dating the time and the date. Obviously the number of keys may be reduced or increased in terms of the requirements of the user.

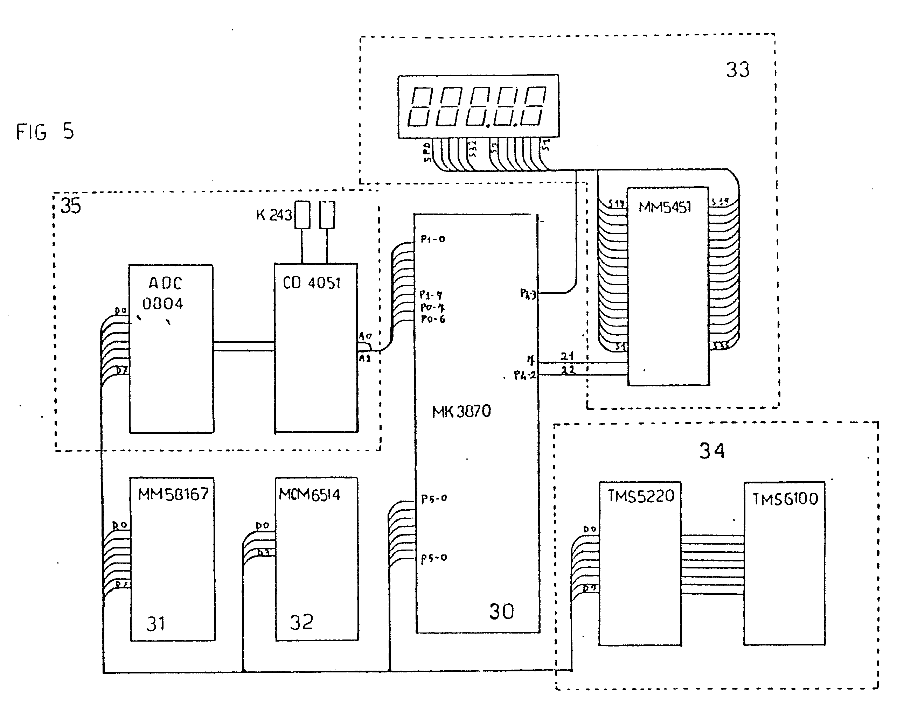

In figure 5 we can note a control block 30 comprising a microprocessor monochip type MK 3870 of the firm MOSTEK with the circuits necessary for its working and including a memory of ROM type, in which the periods of keeping of the eight classes in which the different foods were grouped are stored. To the control block 30 are connected a clock block 31, comprising a perpetual clock-calender circuit type MM58167 of the firm NATIONAL and a buffer battery that takes part in the supplying of the clock in case the current from the mains lacks; a storage block 32, including a RAM memory of type MCM6514 of the firm NATIONAL for storing and bringing up to date the data related to the keeping of foods; a visualization block 33, comprising a display driver type MM5451 of the firm NATIONAL and five displays type D300PA of the firm AEG; a vocal synthesis block 34, comprising the integrated circuits TMS5220 and TMS6100, both of the firm TEXAS INSTRUMENTS and a block 35 comprising the deep-freezers being subject of the present invention, in which two temperature probes type K243 of the firm SIEMENS are inserted; a multiplexer circuit type CD 4051 of the firm NATIONAL and an analog-to-digital converter type ADC0804 of the firm NATIONAL. All the integrated circuits are used in the way suggested by the respective manufacturers in their "applications notes", which contain further details.

In order to understand the working of the improved deep-freezers we wish to point out that together with it the user receives the tables of the foods showed in figure 1 and the keys with the distinctive drawing 1 showed in figure 2. The user, according to the class and the progressive number of the packet or of the group of the packets of the foods to be kept (for example the packet No. 3 of lamb) chooses one of the keys with the distinctive drawing 1 (the one with the drawing of the lamb, the number 6 inside the drawing and the number 3) and inserts it in the slot 27 of the reader 11, so introducing inside the deep-freezing device the identification code of the related food. In a fourth variation the reader 11 may be replaced by a microphone and by a vocal analysis and decodification device, that has the task of changing the human voice in an electric identification code, consequently it is sufficient that the user pronounces the words "charge lamb 3" for example for actually inputting the data in the deep-freezing device. It is clear that said kind of vocal analysis and decodification may be arranged for different languages . Then the user hooks the key with distinctive drawing 1 on the packet or group of packets of the foods examined and stores them inside the room of the deep-freezing device. When the key with distinctive drawing 1 enters the reader 11, the projecting elements of the battlement 5 close the corresponding microswitches present on the bottom of the device 11. The code of identification of the key with distinctive drawing 1 changed into an electrical information is sent to the microprocessor of the control block 30, which verifies if said identification code yet exists in the storage RAM of the storage block 32. If this code does not exist, as in this case, it is associated with it the period of conservation of a certain class of food (240 days), got by the memory ROM of the control block 30 in which said times where previously stored, and the total data (240 days, class 6, packet 3) is stored in the memory RAM. Now the microprocessor of the control block 30 enables the visualization block 33 and the vocal synthesis block 34. The visualization block 33 visualizes a " + " followed by the number of the class and by the progressive number of the packet or group of packets of the foods ( +. 6. 3, see figure 3a), whereas the vocal synthesis block 34 pronounces in the different languages choosen, according to the model of refrigerating device, "lamb 3 charged". It is clear that in case the visualization system comprises a dot matrix display , in this phase the drawing of the main food or the symbol or the code of the class might be visualized. Every 24 hours the microprocessor of the control block 30 brings up to date the content of the memory RAM by taking away a unit from the number of days still usable for the keeping of the food. When the user draws the packet or the group of packets of foods from the deep-freezing device, he has to insert another time the key with distinctive drawing 1 associated to it in a reader 11, (or pronounce for example the words "discharge lamb 3" in case of an input of data in vocal analysis or decodification) and it is valid what we said above till it is checked that the code related to a certain food is contained in the memory RAM. After this verification, the microprocessor of the control block 30 cancels said identification code from the memory RAM and enables the visualization block 33 and the vocal synthesis block 34. The visualization block 33 visualizes a sign "-" followed by the number of the class and by the number of the packet or group of foods (-. 6. 3, see figure 3b) and the vocal synthesis block 34 pronounces "lamb 3 discharged". Besides it is possible to verify the "situation" of the packets of the foods kept, without having to open the door of the deep-freezing device. It is sufficient to press the research key 16 and on the visualization block 33 will appear in sequence the number of days still usable for the keeping followed by the class and by the number of the packet or group of packets of the food (239. 6. 3., see figure 3c), starting from the packet or group of packets of the foods with the nearest term and finishing with the farest term. At the same time the vocal synthesis block 34 repeats by words the same information visualized by the visualization block 33. If a certain packet of group of packets of food has not been drawed by the user before its term, at 12 a.m. of the last but four day usable for its keeping, the deep-freezing device sends an alarm signal by means of the visualization block 33, which starts flashing, showing "0" in all the figures (000. 0. 0, see figure 3d) and to the vocal synthesis block 34, that emits a sound-alarm. The state of alarm continues for a certain time, for example for half an hour, or till the user does not press the research key 16. Then the visualization block 33 indicates the number of days before the term, the class and the number of the packet or of the group of the packets of foods (005. 6. 3, see figure 3e) and the vocal synthesis block 34 says "lamb 3, 5 days to the term". If the user does not draw the packet or the group of packets about to expire, at 12 am. of the following day the deep-freezing device repeats the alarm, with the only difference that when the user pushes the research key 16 the still usable days indicated are 4, and so on till the complete term of the food appears, when the function of alarm becomes more pressing than in the previous cases, for example it may last one or two hours or even continue without stopping till the user does not push the research key 16. The choice of 5 days for the beginning of the alarm signalling is not casual, but answers to the end of permitting to the user to programme his menu, weekly for example, remembering the foods about to expire.

The visualization block 33 usually visualizes the time of the day, but as we already explained in the phase of insertion and removal of the packets of foods, of research or alarm, visualizes the information already described. Moreover, by pushing the key 22, the visualization block 33 visualizes the date and by pushing the key 23 the temperature inside the room of the deep-freezing device. At last the keys 25 and 26 are used for up-dating the time and the date.

The improved deep-freezers presents also an optimum working from an energetic point of view, in fact two temperature probes are provided. A first probe, duly ballasted for simulating a packet of food, is placed in the hottest point of the room for taking the highest temperature of the room and a second probe is placed on the evaporator of the deep-freezing device for taking the temperature of said evaporator. Both the probes, one independently from the other, may drive the compressor on and off; the compressor is driven on when one of the two probes exceeds upward a first threshold of pre-fixed temperature, for example -17° C, whereas it is driven off when the probe placed on the evaporator reaches a second threshold of prefixed temperature, for example -27° C or when the probe placed in the room reaches a third threshold of pre-fixed temperature, for example -19° C. With this way of working the temperature pre-fixed for the keeping, presently of -18° C is kept, avoiding too cold temperatures and then energetic squanders. In the meantime it is not necessary to have a "quick freezing key", since the arrangement and the calibrations of said temperature probes permit to know when foods to be frozen are inserted, and the compressor works continuously till the freezing of foods has not been reached. But a "pre-freezing" key 14 is provided, that when is pressed makes the compressor work continuously till the room reaches a fourth threshold of pre-fixed temperature, for example -25° C: at this moment the yellow light emitting diode 15 begins to flash for notifying that the room is ready for the insertion of the foods to be frozen. When said minimum temperature is reached and in any case after a certain number of hours, for example 10, of continuous working of the compressor, this one passes to a thermostatic working and the yellow light emitting diode 15 begins to flash for a pre-fixed time, for showing that the foods to be frozen can in any case be inserted, since the room has reached the lowest temperature.

At last the reset key 24 is used to put at zero the content of the memory RAM, in the case of a thorough emptying and of a defrosting of the deep-freezing device: in order to avoid that that key is operated accidentally, when inside the deep-freezers there are still foods to be kept, it is operable only with an intentional and combined manoeuvre, for example after having switched off and on the mains switch 12.

From the description effected the advantages of the improved refrigerating device being subject of the present invention result clear.

In particular they are represented by the fact of supplying the user with information about the times of keeping of the foods without having to open the door of the deep-freezing device, by the fact of supplying an alarm signal when the foods are almost near the term date, by the fact of supplying other useful information such as the time of the day, the date and the temperature inside the deep-freezing device and by the fact of presenting an optimum working from the energetic point of view.

It is clear that numerous other variations are possible, for the man skilled in the art, to the improved refrigerating device being subject of the present invention, without departing from the scope of the present invention. Among them we suggest for example the one that gives the user the possibility of choosing the time he prefers, at which the refrigerating device must emit the alarm signals, or to advise him that a certain food is near its term not only for the foods with a long keeping, but also for the foods contained in the fresh food room such as milk, meat, etc.

## Claims

1. Refrigerating device for the keeping of foods, characterized in means for receiving external information (1,11) as to the number and kinds of food kept inside, timers (31) measuring the passing of time, in particular starting from the date of keeping the food, means for processing information (30) connected to said means for receiving information and to said timers (31) and processing the information received by said information receiving means and said timers (31), and means for displaying the data resulting from said processor (30).

2. Improved refrigerating device according to claim 1, characterized in that said means for the acquisition of external information comprise a number of keys with distinctive drawing (1); each one is to be associated to a food or to a group of foods kept and a reader (11) for the keys with distinctive drawing (1).

3. Improved refrigerating device according to claim 1, characterized in that said means for the acquisition of information comprise an input data device provided for vocal analysis and decodification, transforming the human voice in a certain identification code.

4. Improved refrigerating device according to claim 2, characterized in that said keys with distinctive drawing (1) present an identification code (5).

5. Improved refrigerating device according to claim 4, characterized in that said identification code is of mechanical type.

6. Improved refrigerating device according to claim 4, characterized in that said identification code is of optical type.

7. Improved refrigerating device according to claim 4, characterized in that said identification code is of magnetic type.

8. Improved refrigerating device according to claim 5, characterized in that said mechanical identification code is obtained by means of a battlement (5) presented by the keys with distinctive drawings (1).

9. Improved refrigerating device according to claim 8, characterized in that said battlement (5) is in the upper part of said keys with distinctive drawings (1) and by the fact that it consists of a plurality of elements and the presence or the absence of an element represents the basic characteristic of said identification code.

10. Improved refrigerating device according to claim 9, characterized in that only a part of said elements presented by said battlement (5) represent said identification code, whereas the remaining part represents elements for the control of the functionality of the key with distinctive drawing (1)-reader (11) system.

11. Improved refrigerating device according to claim 2, characterized in that said keys with distinctive drawing (1) present a drawing (2) representing a food or a group of foods on one of their surfaces at least.

12. Improved refrigerating device according to claim 2, characterized in that said keys with distinctive drawing (1) present a symbol representing a food or a group of foods on one at least of their surfaces.

13. Improved refrigerating device according to claim 2, characterized in that said keys with distinctive drawing (1) present a code representing a food or a group of foods on one at least of their surfaces.

14. Improved refrigerating device according to one of the claims from 11 to 13, characterized in that said food represented by said drawing (2), code or symbol is the main food of one of "n" classes in which the different kinds of food have been grouped according to their maximum time of keeping.

15. Improved refrigerating device according to claim 14, characterized in that the number "n" of classes in which said foods have been grouped is at least of eight.

16. Improved refrigerating device according to claim 15, characterized in that the eight classes in which the different kinds of foods have been grouped are those ones showed in the table of figure 1 of the present description.

17. Improved refrigerating device according to claim 11, characterized in that on said surface of said keys with distinctive drawing (1) a first number (3) is provided, inside said drawing (2), indicating the number of the class of foods to which said drawing (2) refers.

18. Improved refrigerating device according to claim 11, characterized in that on said surface of said keys with distinctive drawing (1) a second number (4) is provided, indicating one of the "m"' numbers for the consecutive numbering of the packets or number of packets of the foods of a certain class.

19. Improved refrigerating device according to claim 18, characterized in that the maximum value provided for said number "m" is four at least.

20. Improved refrigerating device according to one of the claims from 11 to 18, characterized in that said drawing (2) and said numbers (3,4), or said symbols or said codes are embossed in order to permit an easy reading also to blind persons.

21. Improved refrigerating device according to claim 20, characterized in that said drawing (2) and said numbers (3,4), or said symbols or said codes are substituted or completed with a code suitable to be read by blind persons.

22. Improved refrigerating device according to claims 4, 17 and 18, characterized in that said identification code of said keys with distinctive drawing (1) indicates both one of the "n" classes in which the different kinds of foods have been grouped, and one of the "m" numbers for the consecutive numbering of the packets or groups of packets of the foods in a certain class.

23. Improved refrigerating device according to claim 2, characterized in that said keys with distinctive drawing (1) present hooking means (6) for permitting to hook them to packets or groups of packets of foods.

24. Improved refrigerating device according to claim 23, characterized in that said hooking means comprise a big pin (6).

25. Improved refrigerating device according to claim 23, characterized in that said hooking means comprise a spring hook.

26. Improved refrigerating device according to claims 2 and 11, characterized in that said keys with distinctive drawing (1) present on their surface which is not occupied by said drawing (2), a free space (7) for permitting to the user to use it for its possible notes or personal labels.

27. Improved refrigerating device according to claim 2, characterized in that said reader (11), presents a slot (27) positioned on the instrument board of a warning and control board (10) of the refrigerating device, for permitting the access of said keys with distinctive drawing.

28. Improved refrigerating device according to claim 5, characterized in that said reader is of mechanical type.

29. Improved refrigerating device according to claim 6, characterized in that said reader is of optical type.

30. Improved refrigerating device according to claim 7, characterized in that said reader is of magnetic type.

31. Improved refrigerating device according to claims 9 and 28, characterized in that said mechanical reader consists of a set of micro-switches positioned in correspondence of said elements of said battlement (5).

32. Improved refrigerating device according to claim 1, characterized in that said timers comprise a perpetual clock calender circuit (31).

33. Improved refrigerating device according to claim 32, characterized in that said perpetual clock calender circuit (31) is supplied also by a buffer battery, that works in case of lack of current.

34. Improved refrigerating device according to claim 1, characterized in that said means for the elaboration of information comprise a control element with microprocessor (30) and a RAM type storage (32) for the storage of the processed data.

35. Improved refrigerating device according to claims 11 and 30, characterized in that said microprocessor (30) comprises a ROM type storage in which are stored said classes of the foods with the relative maximum times of keeping.

36. Improved refrigerating device according to claim 1, characterized in that said means for the communication of the information outward comprise a visualization block (33) and/or a vocal synthesis block (34).

37. Improved refrigerating device according to claim 36, characterized in that said visualization block (33) comprises displays with seven segments (17).

38. Improved refrigerating device according to claim 36, characterized in that said visualization block (33) comprises alphanumeric displays.

39. Improved refrigerating device according to claim 36, characterized in that said visualization block (33) comprises light emitting diodes.

40. Improved refrigerating device according to claim 36, characterized in that said visualization block comprises liquid crystals.

41. Improved refrigerating device according to claim 36, characterized in that said visualization block comprises dot matrix displays.

42. Improved refrigerating device according to claim 36, characterized in that said vocal synthesis block (34) includes a loudspeaker (19) and is able to speak different languages.

43. Improved refrigerating device according to claim 3, characterized in that said device for the input of the data of vocal analysis and decodification comprises a microphone and is able to understand a plurality of languages.

44. Improved refrigerating device according to claim 36, characterized in that said visualization block (33) and said vocal synthesis block (34), when both are present, they communicate at the same time the same kind of information.

45. Improved refrigerating device according to claim 1, characterized in that said means for the acquisition of external information (11) and said means for the communication of information outward (17,19)are positioned on a warning and control board (10) of the refrigerating device.

46. Improved refrigerating device according to claim 45, characterized in that said refrigerating device is a deep-freezing device or comprises a freezing room.

47. Improved refrigerating device according to claim 45, characterized in that said warning and control board (10) comprises also a research key (16), a mains switch (12), a first diode emitting light (13) associated to said mains switch (12), a pre-freezing switch (14), a second diode emitting light (15) associated to said pre-freezing switch (14) and a hatch (18) covering a number of keys with the aim of preventing accidental operations.

48. Improved refrigerating device according to claim 47, characterized in that under said hatch (18), said warning and control board (10) presents a first key (21) for the choice of the time of day, a second key (22) for the choice of the date, a third key (23) for the choice of the temperature inside the refrigerating device, a fourth key (24) for the reset of the RAM and a fifth (25) and a sixth (26) key, for the updating of the time and the date.

49. Improved refrigerating device according one or more of the preceding claims, characterized in that said keys with distinctive drawing (1) are inserted in said slot (27), said identification code of said keys with distinctive drawing (1) is read by said reader (11), by the fact that said identification code is sent to said microprocessor (30) and by the fact that said microprocessor (30) verifies if said identification code is contained in said memory RAM (32).

50. Improved refrigerating device according to claim 49, characterized in that if said identification code is not in said memory RAM (32), said microprocessor (30) associates to it the maximum period of keeping of the class of foods to which said identification code refers, drawing it from said memory ROM, stores the total data in said storage RAM (32) and enables said visualization block (33) to visualize a first sequence of symbols and/or said vocal synthesis block (34) to pronounce a first sequence of words showing the insertion , the class and the progressive number of the packet or group of packets of the foods associated to a certain key with distinctive drawing (1).

51. Improved refrigerating device according to claim 50, characterized in that if said identification code is in said memory RAM (32), said microprocessor 30 cancels the total data in which said identification code is contained from the memory RAM (32) and enables said visualization block (33) to visualize a second sequence of symbols and/or said vocal synthesis block (34) to pronounce a second sequence of words indicating the removal, the class and the progressive number of the packet or group of packets of the foods associated to a certain key with distinctive drawing (1).

52. Improved refrigerating device according to claim 50, characterized in that said microprocessor (30) every 24 hours updates the content of said storage RAM (32) reducing of a unit the period of keeping of all the foods contained in the refrigerating device.

53. Improved refrigerating device according to claim 52, characterized in that by pushing said research key (16), said microprocessor (30) enables said visualization block (33) and/or said vocal synthesis block (34) to show in sequence the content of said memory RAM (32) starting from the total data of the food or group of foods nearest to their term, till the farthest one among all the foods contained in the refrigerating device.

54. Improved refrigerating device according to claim 52, characterized in that when, owing to the time passing, a food or a group of foods between those contained in the refrigerating device reach a certain period of keeping next to their terms said microprocessor (30) enables said visualization block (33) and/or said vocal visualization block to emit a first alarm signal.

55. Improved refrigerating device according to claim 54, characterized in that said alarm signals last for a certain time or till the user does not push the research key (16); at this moment said microprocessor (30) enables said visualization block (33) to visualize a third sequence of symbols and/or said vocal synthesis block (34) to pronounce a third sequence of words indicating the days still usable for the keeping, the class and the progressive number of the packet or the group of packets of the food about to expiry.

56. Improved refrigerating device according to claim 54, characterized in that said certain time of keeping left, after which said microprocessor (30) enables said visualization block (33) and/or said vocal synthesis block (34) to emit said first alarm signal is of a week about.

57. Improved refrigerating device according to claim 54, characterized in that if the user does not draw the food or the group of foods about to expiry in the refrigerating device, the day after said microprocessor (30) enables again said visualization block (33) and/or said vocal synthesis block (34) to emit again said first alarm signal and so on till the date of the effective term of said food or group of foods.

58. Improved refrigerating device according to claim 57, characterized in that at the term of said food or group of foods said microprocessor (30) enables said visualization block (33) and/or said vocal synthesis block (34) to emit a second alarm signal more loud than said alarm signal.

59. Improved refrigerating device according to claim 54 and 58, characterized in that said first and second alarm signal are emitted at 12 a.m. about.

60. Improved refrigerating device according to claims 54 and 58, characterized in that said first and second alarm signals are emitted at a time of the day programmable by the user.

61. Improved refrigerating device according to claim 36, characterized in that said visualization block (33) and/or said vocal synthesis block (34) usually indicate the time of the day.

62. Improved refrigerating device according to claim 61, characterized in that said visualization block (33) and/or said vocal synthesis block (34) indicates the date, by pushing a suitable key.

63. Improved refrigerating device according to claim 61, characterized in that said visualization block (33) and/or said vocal synthesis block (34) indicates the inner temperature of the refrigerating device, by pushing a suitable key.

64. Improved refrigerating device according to claim 1, characterized in that said means for the elaboration of information (30), with two temperature probes positioned inside the refrigerting device, permit an optimum working of the refrigerating device from the energy point of view.

65. Improved refrigerating device according to claim 64, characterized in that one of the two said temperature probes is positioned in the cooling room of the refrigerating device, whereas the other is positioned on the evaporator of the refrigerating device and by the fact that both the two said temperature probes enable the compressor of the refrigerating device to be driven on when they reach a first threshold of pre-fixed temperature, whereas said probe placed in the room of the refrigerating device drives off the compressor of the refrigerating device when it reaches a second threshold of pre-fixed temperature and said probe placed on the evaporator of the refrigerating device drives off the compressor of the refrigerating device when it reaches a third threshold of temperature lower than both the first and second pre-fixed threshold.

66. Improved refrigerating device according to claim 65, characterized in that when new foods to be freezed are put in the refrigerating device, the two said temperature probes and said threshold of temperature permit that said compressor of the refrigerating device works continuously for all the time of food freezing.

67. Improved refrigerating device according to claim 66, characterized in that said compressor of the refrigerating device works continuously also in case a pre-freezing switch (14) is operated.

68. Improved refrigerating device according to claim 67, characterized in that said continuous working of said compressor of the refrigerating device continues till the room of the refrigerating device reaches a pre-fixed threshold of temperature and by the fact that when the room of the refrigerating device reaches said threshold of temperature a light emitting diode (15) begins to flash.

69. Improved refrigerating device according to claim 68, characterized in that said pre-fixed threshold of temperature is of about -25° C.

70. Improved refrigerating device according to claim 68, characterized in that if after a certain number of hours the continuous working of said compressor of the refrigerating device said pre-fixed threshold of temperature has not been reached, said compressor of the refrigerating device stops in any case and said light emitting diode (15) begins to flash.

71. Improved refrigerating device according to claim 70, characterized in that said number of hours of working after which said compressor of said refrigerating device stops is 10 about.

**Revendications**

1. Dispositif de réfrigération pour la conservation d'aliments, caractérisé par des moyens de réception d'information extérieure (1,11), telle que le nombre et la nature des aliments conservés à l'intérieur, par des minuteries (31) mesurant le temps écoulé, mises en route en particulier, à la date de mise en conservation des aliments, par des moyens de traitement de l'information (30), lesquels sont reliés auxdits moyens de réception d'information et auxdites minuteries (31) et traitant l'information reçue par lesdits moyens de réception d'information et lesdites minuteries (31), et des moyens pour afficher les données provenant dudit processeur (30).

2. Dispositif de réfrigération amélioré selon la revendication 1, caractérisé en ce que lesdits moyens d'acquisition d'information extérieure comprennent un certain nombre de badges ou clés portant des dessins distinctifs (1); chacun étant associé à un aliment ou groupe d'aliments conservés et comprennent un lecteur (11) des clés portant un dessin distinctif (1).

3. Dispositif de réfrigération amélioré selon la revendication 1, caractérisé en ce que lesdits moyens d'acquisition d'information comprennent un dispositif pour les données d'entrées, prévu pour l'analyse vocale et le décodage, transformant la voix humaine en un code d'identification déterminé.

4. Dispositif de réfrigération amélioré selon la revendication 2, caractérisé en ce que lesdites clés portant un dessin distinctif (1) présentent un code d'identification (5).

5. Dispositif de réfrigération amélioré selon la revendication 4, caractérisé en ce que ledit code d'identification est de type mécanique.

6. Dispositif de réfrigération amélioré selon la revendication 4, caractérisé en ce que ledit code d'identification est de type optique.

7. Dispositif de réfrigération amélioré selon la revendication 4, caractérisé en ce que ledit code d'identification est de type magnétique.

8. Dispositif de réfrigération amélioré selon la revendication 5, caractérisé en ce que ledit code d'identification mécanique est obtenu au moyen d'un petit créneau (5) présenté par les clés portant des dessins distinctifs (1).

9. Dispositif de réfrigération amélioré selon la revendication 8, caractérisé en ce que ledit petit créneau (5) est situé en partie supérieure desdites clés à dessins distinctifs (1) et en ce qu'il consiste en une pluralité d'éléments et que la présence ou l'absence d'un élément représente la caractéristique de base dudit code d'identification.

10. Dispositif de réfrigération amélioré selon la revendication 9, caractérisé en ce que seule une partie des dits éléments présentés par ledit petit créneau (5) représente ledit code d'identification, alors que la partie restante représente des éléments de commande de fonctionnalité du système lecteur (11) de la clé qui porte le dessin distinctif (1).

11. Dispositif de réfrigération amélioré selon la revendication 2, caractérisé en ce que lesdites clé à dessin distinctif (1) présentent un dessin (2) représentant l'aliment, le groupe d'aliment,, au moins sur une de leur surfaces.

12. Dispositif de réfrigération amélioré selon la revendication 2, caractérisé en ce que lesdites clés à dessin distinctif (1) présentent un symbole représentant un aliment ou groupe d'aliments, au moins sur une de leurs surfaces.

13. Dispositif de réfrigération amélioré selon la revendication 2, caractérisé en ce que lesdites clés à dessin distinctif (1) présentent un code représentant un aliment ou groupe d'aliments, au moins sur une de leurs surfaces.

14. Dispositif de réfrigération amélioré selon l'une des revendications 11 à 13, caractérisé en ce que ledit aliment, représenté par ledit dessins (2), code ou symbole est l'aliment principal de l'une des "n" classes dans lesquelles les différents types d'aliment ont été groupés en fonction de leur durée de conservation maximale.

**15.** Dispositif de réfrigération amélioré selon la revendication 14, caractérisé en ce que le nombre "n" de classes dans lesquelles lesdits aliments ont été groupés est d'au moins huit.

**16.** Dispositif de réfrigération amélioré selon la revendication 15, caractérisé en ce que les huit classes dans lesquelles les différents types d'aliments ont été groupés sont celles qui sont représentées sur le tableau de la figure 1 de la présente description.

**17.** Dispositif de réfrigération amélioré selon la revendication 11, caractérisé en ce que, sur ladite surface desdites clés à dessin distinctif (1), est placé un premier numéro (3), à l'intérieur dudit dessin (2), qui indique le numéro de la classe d'aliments à laquelle ledit dessin (2) se réfère.

**18.** Dispositif de réfrigération amélioré selon la revendication 11, caractérisé en ce que, sur ladite surface desdites clés à dessin distinctif (1), est placé un second numéro (4), qui indique celui des "m" numéros de la numérotation consécutive des paquets ou le nombre de paquets d'aliments d'une classe déterminée.

**19.** Dispositif de réfrigération amélioré selon la revendication 18, caractérisé en ce que la valeur maximale prévue pour le numéro "m" est d'au moins quatre.

**20.** Dispositif de réfrigération amélioré selon l'une des revendications 11 à 18, caractérisé en ce que ledit dessin (2) et lesdits numéros (3,4), ou lesdits symboles ou lesdits codes sont en relief afin de pouvoir être facilement identifiés également par des personnes aveugles.

**21.** Dispositif de réfrigération amélioré selon la revendication 20, caractérisé en ce que ledit dessin (2) et lesdits numéros (3,4), ou lesdits symboles ou lesdits codes sont remplacés ou complétés par un code adéquat afin de pouvoir être identifiés par des personnes aveugles.

**22.** Dispositif de réfrigération amélioré selon les revendications 4, 17 et 18, caractérisé en ce que ledit code d'identification desdites clés à dessin distinctif (1) indique à la fois l'une des "n" classes dans lesquelles les différents types d'aliments ont été groupés, et l'un des "m" numéros de la numérotation consécutive des paquets ou groupes de paquets d'aliments dans une classe déterminée.

**23.** Dispositif de réfrigération amélioré selon la revendication 2, caractérisé en ce que lesdites clés à dessin distinctif (1) présentent des moyens d'accrochage (5) afin de permettre de les accrocher en paquets ou groupes de paquets d'aliments.

**24.** Dispositif de réfrigération amélioré selon la revendication 23, caractérisé en ce que lesdits moyens d'accrochage comprennent une grosse tige (6).

**25.** Dispositif de réfrigération amélioré selon la revendication 23, caractérisé en ce que lesdits moyens d'accrochage comprennent un crochet à ressort.

**26.** Dispositif de réfrigération amélioré selon les revendications 2 et 11, caractérisé en ce que lesdites clés à dessin distinctif (1) présentent sur leur surface ne portant pas de dessin (1) un espace libre (7) pour permettre à l'utilisateur de les utiliser pour y porter des notes éventuelles ou des étiquettes personnelles.

**27.** Dispositif de réfrigération amélioré selon la revendication 2, caractérisé en ce que ledit lecteur (11) présente une fente (27) positionnée sur le tableau de bord d'un panneau d'affichage et de contrôle (10) du dispositif de réfrigération, pour permettre l'accès desdites clés à dessin distinctif.

**28.** Dispositif de réfrigération amélioré selon la revendication 5, caractérisé en ce que ledit lecteur est de type mécanique.

**29.** Dispositif de réfrigération amélioré selon la revendication 6, caractérisé en ce que ledit lecteur est de type optique.

**30.** Dispositif de réfrigération amélioré selon la revendication 7, caractérisé en ce que ledit lecteur est de type magnétique.

**31.** Dispositif de réfrigération amélioré selon les revendications 9 et 28, caractérisé en ce que ledit lecteur mécanique consiste en un jeu de micro-interrupteurs positionnés en correspondance desdits éléments dudit petit créneau (5).

**32.** Dispositif de réfrigération amélioré selon la revendication 1, caractérisé en ce que lesdites minuteries comprennent un circuit de calendrier (31) à mouvement perpétuel.

33. Dispositif de réfrigération amélioré selon la revendication 32, caractérisé en ce que ledit circuit de calendrier (31) à mouvement perpétuel est alimenté par une batterie tampon qui est mise en oeuvre en cas de coupure de courant.

34. Dispositif de réfrigération amélioré selon la revendication 1, caractérisé en ce que lesdits moyens d'élaboration d'information comprennent un élément de contrôle à micro-processeur (30) et une mémoire (32) de type RAM pour le stockage des données traitées.

35. Dispositif de réfrigération amélioré selon les revendications 11 et 30, caractérisé en ce que ledit micro-processeur (30) comprend un stockage de type ROM dans lequel sont stockées lesdites classes d'aliments avec leur durée maximale de stockage relative.

36. Dispositif de réfrigération amélioré selon la revendication 1, caractérisé en ce que lesdits moyens de communication de l'information vers l'extérieur comprennent un bloc de visualisation (33) et/ou un bloc de synthèse vocale (34).

37. Dispositif de réfrigération amélioré selon la revendication 36, caractérisé en ce que ledit bloc de visualisation (33) comprend des affichages à sept segments (17).

38. Dispositif de réfrigération amélioré selon la revendication 36, caractérisé en ce que ledit bloc de visualisation (33) comprend des affichages alphanumériques.

39. Dispositif de réfrigération amélioré selon la revendication 36, caractérisé en ce que ledit bloc de visualisation (33) comprend des diodes luminescentes.

40. Dispositif de réfrigération amélioré selon la revendication 36, caractérisé en ce que ledit bloc de visualisation comprend des cristaux liquides.

41. Dispositif de réfrigération amélioré selon la revendication 36, caractérisé en ce que ledit bloc de visualisation comprend des affichages à matrice de points.

42. Dispositif de réfrigération amélioré selon la revendication 36, caractérisé en ce que ledit bloc de synthèse vocale (34) comprend un haut-parleur (19) et est susceptible de parler différentes langues.

43. Dispositif de réfrigération amélioré selon la revendication 3, caractérisé en ce que ledit dispositif d'entrée des données d'analyse vocale et de décodage comprend un microphone et est susceptible de comprendre plusieurs langues.

44. Dispositif de réfrigération amélioré selon la revendication 36, caractérisé en ce que ledit bloc de visualisation (33) et ledit bloc de synthèse vocale (34), dans le cas où ils sont tous deux présents, communiquent en même temps le même type d'information.

45. Dispositif de réfrigération amélioré selon la revendication 1, caractérisé en ce que lesdits moyens d'acquisition d'information extérieure (11) et lesdits moyens de communication d'infirmation vers l'extérieur (17,19) sont placés sur le tableau d'affichage et de contrôle (10) du dispositif de réfrigération.

46. Dispositif de réfrigération amélioré selon la revendication 45, caractérisé en ce que ledit dispositif de réfrigération est un dispositif surgélateur ou comprend un compartiment surgélateur.

47. Dispositif de réfrigération amélioré selon la revendication 45, caractérisé en ce que ledit anneau d'affichage et de contrôle (10) comprend également une clé de recherche (16), un interrupteur principal (12), un premier affichage à diode luminescente (13) associé audit interrupteur principal (12), un interrupteur de précongélation (14), un second affichage à diode luminescente (15) associé audit interrupteur de précongélation (14) et un capot (18) couvrant un certain nombre de clés en vue d'empêcher des opérations par inadvertance.

48. Dispositif de réfrigération amélioré selon la revendication 47, caractérisé en ce qu'au dessous dudit capot (18), ledit tableau d'affichage et de contrôle (10) présente une première touche (21) pour le choix de l'heure du jour, une seconde touche (22) pour le choix de la date, une troisième touche (23) pour le choix de la température à l'intérieur du dispositif de réfrigération, une quatrième touche (24) pour la remise à zéro de la RAM et une cinquième touche (25) et une sixième touche (26) pour la mise à jour de l'heure et de la date.

49. Dispositif de réfrigération amélioré selon une ou plusieurs des revendication précédentes, caractérisé en ce que lesdites clés à dessin distinctif (1) sont insérées dans ladite fente (27), ledit code d'identification desdites clés à dessin distinctif (1) étant lu par ledit lecteur (11), par le fait que ledit code d'identification est envoyé audit microprocesseur (30) et par le fait que ledit microprocesseur (30) vérifie si ledit code d'identification est contenu dans ladite mémoire RAM (32).

50. Dispositif de réfrigération amélioré selon la revendication 49, caractérisé en ce que, si ledit code d'identification ne se trouve pas dans ladite mémoire RAM (32), ledit microprocesseur (30) lui associe la période maximale de conservation de la classe d'aliments à laquelle se réfère ledit code d'identification, en l'obtenant dans ladite mémoire ROM, stocke le total des données dans ledit stockage RAM (32) et permet audit bloc de visualisation (33) de visualiser une première suite de symboles et/ou audit bloc de synthèse vocale (34) de prononcer une première suite de mots montrant l'insertion, la classe et le numéro d'ordre du paquet ou du groupe de paquets d'aliments qui sont associés à une clé déterminée à dessin distinctif (1).

51. Dispositif de réfrigération amélioré selon la revendication 50, caractérisé en ce que, si ledit code d'identification se trouve dans ladite mémoire RAM (32), ledit microprocesseur (30) annule dans la mémoire RAM (32) la totalité des données dans lesquelles est contenu ledit code d'identification et permet audit bloc de visualisation (33) de visualiser une deuxième suite de symboles et/ou audit bloc de synthèse vocale (34) de prononcer une deuxième suite de mots indiquant le prélèvement, la classe et le numéro d'ordre du paquet ou du groupe de paquets d'aliments qui sont associés à une clé déterminée à dessin distinctif (1).

52. Dispositif de réfrigération amélioré selon la revendication 50, caractérisé en ce que ledit microprocesseur (30) met à jour toutes les 24 heures le contenu dudit stockage RAM (32) afin de réduire d'une unité la période de conservation de tous les aliments contenus dans le dispositif de réfrigération.

53. Dispositif de réfrigération amélioré selon la revendication 52, caractérisé en ce qu'en poussant ladite touche de recherche (16), ledit microprocesseur (30) permet audit bloc de visualisation (33) et/ou audit bloc de synthèse vocale (34) de montrer dans l'ordre le contenu de ladite mémoire (32), en commençant par la totalité des données concernant l'aliment ou le groupe d'aliments qui est le plus près de leur terme, jusqu'à celui qui en est le plus éloigné, en passant en revue la totalité des aliments contenus dans le dispositif de réfrigération.

54. Dispositif de réfrigération amélioré selon la revendication 52, caractérisé en ce que lorsque, lors de l'écoulement du temps, un aliment ou un groupe d'aliment situé parmi ceux contenus dans le dispositif de réfrigération atteint une période déterminée de conservation qui est proche du terme, ledit microprocesseur (30) engage via ledit bloc de visualisation (33) et/ou ledit bloc de visualisation vocale l'émission d'un premier signal d'alarme.

55. Dispositif de réfrigération amélioré selon la revendication 54, caractérisé en ce que ladite alarme effectue une signalisation pour une durée déterminée ou tant que l'utilisateur ne pousse pas la touche de recherche (16); à cet instant, ledit microprocesseur (30) permet audit bloc de visualisation (33) de visualiser une troisième suite de symbole et/ou au bloc de synthèse vocale (34) d'émettre une troisième suite de mots indiquant le reste des jours possibles de conservation, la classe et le numéro d'ordre du paquet ou du groupe de paquets d'aliments arrivant à expiration.

56. Dispositif de réfrigération amélioré selon la revendication 54, caractérisé par l'existence d'un temps déterminé de mise à l'écart, après lequel ledit microprocesseur (30) permet audit bloc de visualisation (33) et/ou audit bloc de synthèse vocale (34) d'émettre ledit premier signal d'alarme pendant environ une semaine.

57. Dispositif de réfrigération amélioré selon la revendication 54 caractérisé en ce que si l'utilisateur n'extrait pas l'aliment ou le groupe d'aliments à leur date d'expiration dans le dispositif de réfrigération, le jour suivant, ledit microprocesseur (30) permet audit bloc de visualisation (33) et/ou audit bloc de synthèse vocale (34) d'émettre à nouveau ledit premier signal d'alarme et ainsi de suite, jusqu'à la date du délai de péremption dudit aliment ou groupe d'aliments.

58. Dispositif de réfrigération amélioré selon la revendication 57, caractérisé en ce qu'à l'issu du délai respectif audit aliment ou groupe d'aliment, ledit microprocesseur (30) permet audit bloc de visualisation (33) et/ou audit bloc de synthèse vocale (34) d'émettre un second signal d'alarme plus intense que ledit premier signal d'alarme.

59. Dispositif de réfrigération amélioré selon les revendications 54 et 58, caractérisé en ce que lesdits premier et second signaux d'alarme sont émis à peu près à midi.

60. Dispositif de réfrigération amélioré selon les revendications 54 et 58, caractérisé en ce que lesdits premier et second signaux d'alarme sont émis à un moment de la journée qui est programmable par l'utilisateur.

61. Dispositif de réfrigération amélioré selon la revendication 36, caractérisé en ce que ledit bloc de visualisation (33) et/ou ledit bloc de synthèse vocale (34) indiquent usuellement l'heure du jour.

62. Dispositif de réfrigération amélioré selon la revendication 61, caractérisé en ce que ledit bloc de visualisation (33) et/ou ledit bloc de synthèse vocale (34) indiquent la date, en poussant sur une touche adéquate.

63. Dispositif de réfrigération amélioré selon la revendication 61, caractérisé en ce que ledit bloc de visualisation (33) et/ou ledit bloc de synthèse vocale (34) indiquent la température intérieure du dispositif de réfrigération, en poussant sur une touche adéquate.

64. Dispositif de réfrigération amélioré selon la revendication 1, caractérisé en ce que lesdits moyens d'élaboration d'information (30), comportant deux sondes de température placées à l'intérieur du dispositif de réfrigération, permettent un fonctionnement optimal du dispositif de réfrigération, du point de vue énergétique.

65. Dispositif de réfrigération amélioré selon la revendication 64, caractérisé en ce que l'une des deux sondes de température est placée dans le compartiment réfrigérateur du dispositif de réfrigération, tandis que l'autre est placé sur l'évaporateur du dispositif de réfrigération, et, par le fait que l'ensemble des deux sondes de températures permet au compresseur du dispositif de réfrigération d'être mis en fonctionnement lorsqu'est atteinte une première température de seuil ou prédéterminée, alors ladite sonde placée dans le compartiment réfrigérateur stoppe le fonctionnement du compresseur du dispositif de réfrigération lorsqu'est atteinte une seconde température de seuil ou prédéterminée et la dite sonde placée sur l'évaporateur du dispositif de réfrigération stoppant le compresseur du dispositif de réfrigération lorsqu'est atteint un troisième seuil de température, qui est inférieur à l'ensemble des deux premier et second seuils de température.

66. Dispositif de réfrigération amélioré selon la revendication 65, caractérisé en ce que lorsque de nouveaux aliments à surgeler sont placés dans le dispositif de réfrigération, les deux sondes de température et seuils de température permettent que ledit compresseur du dispositif de réfrigération fonctionne de façon continu pour toute la durée de la surgelation de l'aliment.

67. Dispositif de réfrigération amélioré selon la revendication 66, caractérisé en ce que ledit compresseur du dispositif de réfrigération fonctionne en continu, également dans le cas de manoeuvre d'un interrupteur de précongélation (14).

68. Dispositif de réfrigération amélioré selon la revendication 67, caractérisé en ce que ledit fonctionnement continu dudit compresseur du dispositif de réfrigération continu jusqu'à ce que le compartiment du dispositif de réfrigération atteigne un seuil prédéterminé de température et par le fait que lorsque le compartiment du dispositif de réfrigération atteint ledit seuil de température, une diode lumineuse (15) commence à clignoter.

69. Dispositif de réfrigération amélioré selon la revendication 68, caractérisé en ce que ledit seuil prédéterminé de température est d'à peu près -25° C.

70. Dispositif de réfrigération amélioré selon la revendication 68, caractérisé en ce, si après un certain nombre d'heures, le fonctionnement en continu dudit compresseur du dispositif de réfrigération ,'a pas permis d'atteindre ledit seuil prédéterminé de température, ledit compresseur du dispositif de réfrigération s'arrête de fonctionner de toute façon et que la diode lumineuse (15) commence à clignoter.

71. Dispositif de réfrigération amélioré selon la revendication 70, caractérisé en ce que ledit nombre d'heures de fonctionnement après lequel ledit compresseur dudit dispositif de réfrigération s'arrête de fonctionner est d'environ 10.

**Ansprüche**

1. Kühlvorrichtung zum Aufbewahren von Lebensmitteln, gekennzeichnet durch Mittel für die Aufnahme externer Informationen (1,11) bezüglich der Anzahl und der Art der im Inneren aufbewahrten Lebensmittel, Zeitmesser (31) zum Ermitteln der verstreichenden Zeit, insbesondere vom Beginn der Aufnahme des Lebensmittels, Mittel zur Informationsverarbeitung (30), die mit den Mitteln für die Informationsaufnahme und den Zeitmessern (31) verbunden sind und die Informationen verarbeiten, die von den Mitteln für die Informationsaufnahme und den Zeitmessern (31) kommen, sowie Mittel zur Anzeige der von den Verarbeitungsmitteln (30) ausgegebenen Daten.

2. Kühlvorrichtung nach Anspruch 1, dadurch gekennzeichnet, daß die Mittel für die Aufnahme externer Informationen eine Anzahl von Schlüsseln mit charakterisierender Darstellung (1), von denen jede einem Lebensmittel oder einer Gruppe von Lebensmitteln zugeordnet ist, sowie einen Leser (11) für die Schlüssel mit der charakterisierenden Darstellung (1) haben.

3. Kühlvorrichtung nach Anspruch 1, dadurch gekennzeichnet, daß die Mittel für die Aufnahme externer Informationen ein Dateneingabeorgan für die vokale Analyse und Dekodierung haben, das die menschliche Stimme in einen bestimmten Identifikationscode umformt.

4. Kühlvorrichtung nach Anspruch 2, dadurch gekennzeichnet, daß die Schlüssel mit charakterisierender Darstellung (1) einen Identifikationscode (5) aufweisen.

5. Kühlvorrichtung nach Anspruch 4, dadurch gekennzeichnet, daß der Identifikationscode mechanisch ist.

6. Kühlvorrichtung nach Anspruch 4, dadurch gekennzeichnet, daß der Identifikationscode optisch ist.

7. Kühlvorrichtung nach Anspruch 4, dadurch gekennzeichnet, daß der Identifikationscode magnetisch ist.

8. Kühlvorrichtung nach Anspruch 5, dadurch gekennzeichnet, daß der mechanische Identifikationscode aus Zinnen (5) besteht, die an den Schlüsseln mit den charakterisierenden Darstellungen (1) vorgesehen sind.

9. Kühlvorrichtung nach Anspruch 8, dadurch gekennzeichnet, daß die Zinnen (5) am oberen Teil der Schlüssel mit den charakterisierenden Darstellungen (1) liegen und daß diese aus einer Mehrzahl von Elementen bestehen, wobei das Vorhandensein bzw. das Fehlen eines Elementes die Grundcharakteristik des Identifikationscodes bildet.

10. Kühlvorrichtung nach Anspruch 9, dadurch gekennzeichnet, daß nur ein Teil der Elemente der Zinnen (5) den Identifikationscode darstellt, während der übrige Teil Elemente für die Funktionskontrolle des aus Schlüssel mit charakterisierender Darstellung (1) und Leser (11) bestehenden Systems darstellt.

11. Kühlvorrichtung nach Anspruch 2, dadurch gekennzeichnet, daß die Schlüssel mit charakterisierender Darstellung (1) auf wenigstens einer Seite eine das Lebensmittel oder die Gruppe der Lebensmittel wiedergebende Abbildung (2) aufweisen.

12. Kühlvorrichtung nach Anspruch 2, dadurch gekennzeichnet, daß die Schlüssel mit charakterisierender Darstellung (1) auf wenigstens einer Seite ein das Lebensmittel oder die Gruppe der Lebensmittel wiedergebendes Symbol aufweisen.

13. Kühlvorrichtung nach Anspruch 2, dadurch gekennzeichnet, daß die Schlüssel mit charakterisierender Darstellung (1) auf wenigstens einer Seite einen das Lebensmittel oder die Gruppe der Lebensmittel wiedergebenden Code enthalten.

14. Kühlvorrichtung nach einem der Ansprüche 11 bis 13, dadurch gekennzeichnet, daß das durch die Abbildung (2), den Code oder das Symbol wiedergegebene Lebensmittel das Hauptlebensmittel einer von n Klassen ist, in denen die unterschiedlichen Arten von Lebensmittel entsprechend ihrer maximalen Aufbewahrungszeit gruppiert sind.

15. Kühlvorrichtung nach Anspruch 14, dadurch gekennzeichnet, daß die Zahl n der Klassen, in denen die Lebensmittel gruppiert sind, wenigstens acht beträgt.

16. Kühlvorrichtung nach Anspruch 15, dadurch gekennzeichnet, daß die acht Klassen, in denen die unterschiedlichen Arten von Lebensmitteln gruppiert sind, den in der Tabelle der Figur 1 der Beschreibung wiedergegebenen Klassen entsprechen.

17. Kühlvorrichtung nach Anspruch 11, dadurch gekennzeichnet, daß auf der Seite der Schlüssel mit charakterisierender Darstellung (1) eine erste Zahl (3) innerhalb der Abbildungen (2) wiedergegeben ist, die die Nummer der Klasse von Lebensmitteln wiedergibt, auf die sich die Abbildung (2) bezieht.

18. Kühlvorrichtung nach Anspruch 11, dadurch gekennzeichnet, daß auf der Seite der Schlüssel mit charakterisierender Darstellung (1) eine zweite Zahl (4) wiedergegeben ist, die eine von m Zahlen einer fortlaufenden Numerierung von Paketen oder Anzahl von Paketen der Lebensmittel einer bestimmten Klasse angibt.

19. Kühlvorrichtung nach Anspruch 18, dadurch gekennzeichnet, daß der Maximalwert der Zahl m wenigstens vier beträgt.

20. Kühlvorrichtung nach einem der Ansprüche 11 bis 18, dadurch gekennzeichnet, daß die Abbildung (2) und die Zahlen (3,4) oder Symbole oder Codes geprägt sind, um auch blinden Personen eine leichte Erkennung zu ermöglichen.

21. Kühlvorrichtung nach Anspruch 20, dadurch gekennzeichnet, daß die Abbildung (2) und die Zahlen (3,4) oder Symbole oder Codes durch einen Code ersetzt oder ergänzt sind, der von blinden Personen erfaßt werden kann.

22. Kühlvorrichtung nach den Ansprüchen 4, l7 und 18, dadurch gekennzeichnet, daß der Identifikationscode der Schlüssel mit den charakterisierenden Darstellungen (1) sowohl eine der n Klassen, in denen die unterschiedlichen Arten von Lebensmitteln gruppiert sind, als auch eine der m Zahlen für die fortlaufende Numerierung der Pakete oder Gruppen von Paketen von Lebensmitteln in einer bestimmten Klasse angibt.

23. Kühlvorrichtung nach Anspruch 2, dadurch gekennzeichnet, daß die Schlüssel mit charakterisierender Darstellung (1) hakenartige Mittel (6) zum Anhängen an die Pakete oder Gruppen von Paketen von Lebensmitteln aufweisen.

24. Kühlvorrichtung nach Anspruch 23, dadurch gekennzeichnet, daß die hakenartigen Mittel einen großen Stift (6) aufweisen.

25. Kühlvorrichtung nach Anspruch 23, dadurch gekennzeichnet, daß die hakenartigen Mittel einen Federhaken aufweisen.

26. Kühluorrichtung nach den Ansprüchen 2 und 11, dadurch gekennzeichnet, daß die Schlüssel mit charakterisierender Darstellung (1) auf der nicht durch die Abbildung (2) besetzten Seite einen freien Raum (7) haben, der dem Benutzer für Notierungen und persönliche Etiketten zur Verfügung steht.

27. Kühlvorrichtung nach Anspruch 2, dadurch gekennzeichnet, daß der Leser (11) einen Schlitz (27) hat, der sich auf dem Instrumentenbrett einer Warn- und Kontrolltafel (10) der Kühlvorrichtung befindet und für die Einführung der Schlüssel mit charakterisierender Darstellung dient.

28. Kühlvorrichtung nach Anspruch 5, dadurch gekennzeichnet, daß der Leser mechanischer Bauart ist.

29. Kühlvorrichtung nach Anspruch 6, dadurch gekennzeichnet, daß der Leser optischer Bauart ist.

30. Kühlvorrichtung nach Anspruch 7, dadurch gekennzeichnet, daß der Leser magnetischer Bauart ist.

31. Kühlvorrichtung nach den Ansprüchen 9 und 28, dadurch gekennzeichnet, daß der mechanische Leser aus einer Gruppe von Mikroschaltern besteht, die im Bereich der Elemente der Zinnen (5) angeordnet sind.

32. Kühlvorrichtung nach Anspruch 1, dadurch gekennzeichnet, daß die Zeitmesser eine immerwährende Kalenderuhrschaltung (31) aufweisen.

33. Kühlvorrichtung nach Anspruch 32, dadurch gekennzeichnet, daß die immerwährende Kalenderuhrschaltung (31) auch von einer Pufferbatterie versorgt wird, die bei Stromausfall arbeitet.

34. Kühlvorrichtung nach Anspruch 1, dadurch gekennzeichnet, daß die Mittel zur Verarbeitung der Informationen ein Steuerelement mit einem Mikroprozessor (30) sowie einen RAM-Speicher (32) für die Speicherung der verarbeiteten Daten haben.

35. Kühlvorrichtung nach Anspruch 11 und 34, dadurch gekennzeichnet, daß der Mikroprozessor (30) einen ROM-Speicher hat, in dem die Klassen der Lebensmittel mit den zugehörigen Höchstaufbewahrungszeiten gespeichert sind.

36. Kühlvorrichtung nach Anspruch 1, dadurch gekennzeichnet, daß die Mittel zur Weitergabe der Informationen nach außen einen Anzeigeblock (33) und/oder einen Vokalsyntheseblock (34) aufweisen.

37. Kühlvorrichtung nach Anspruch 36, dadurch gekennzeichnet, daß der Anzeigeblock (33) Siebensegment-Displays (17) hat.

38. Kühlvorrichtung nach Anspruch 36, dadurch gekennzeichnet, daß der Anzeigeblock (33) alphanumerische Displays hat.

39. Kühlvorrichtung nach Anspruch 36, dadurch gekennzeichnet, daß der Anzeigeblock (33) lichtemittierende Dioden hat.

40. Kühlvorrichtung nach Anspruch 36, dadurch gekennzeichnet, daß der Anzeigeblock Flüssigkristalle hat.

41. Kühlvorrichtung nach Anspruch 36, dadurch gekennzeichnet, daß der Anzeigeblock Punktmatrix-Displays hat.

42. Kühlvorrichtung nach Anspruch 36, dadurch gekennzeichnet, daß der Vokalsyntheseblock (34) einen Lautsprecher (19) aufweist, der unterschiedliche Sprachen spricht.

43. Kühlvorrichtung nach Anspruch 3, dadurch gekennzeichnet, daß das Dateneingabeorgan für die vokale Analyse und Dekodierung ein Mikrophon hat und eine Mehrzahl von Sprachen versteht.

44. Kühlvorrichtung nach Anspruch 36, dadurch gekennzeichnet, daß der Anzeigeblock (33) und der Vokalsyntheseblock (34) gleichzeitig dieselbe Art von Information wiedergeben, wenn beide vorhanden sind.

45. Kühlvorrichtung nach Anspruch 1, dadurch gekennzeichnet, daß die Mittel für die Aufnahme externer Informationen (11) und die Mittel für die Weitergabe der Informationen nach außen (17,19) auf einer Warn- und Kontrolltafel (10) der Kühlvorrichtung angeordnet sind.

46. Kühlvorrichtung nach Anspruch 45, dadurch gekennzeichnet, daß diese eine Tiefkühlvorrichtung ist oder einen Gefrierraum aufweist.

47. Kühlvorrichtung nach Anspruch 45, dadurch gekennzeichnet, daß die Warn- und Kontrolltafel (10) weiterhin aufweist eine Suchtaste (16), einen Netzschalter (12), eine erste Leuchtdiode (13), die mit dem Netzschalter (12) verbunden ist, einen Vorgefrierschalter (14), eine zweite Leuchtdiode (15), die mit dem Vorgefrierschalter (14) verbunden ist, sowie eine Klappe (18) zur Abdeckung einer Anzahl von Tasten und zur Verhinderung unbeabsichtigter Betätigungen der Tasten.

48. Kühlvorrichtung nach Anspruch 47, dadurch gekennzeichnet, daß unter der Klappe (18) die Warn- und Kontrolltafel (10) eine erste Taste (21) für die Wahl der Tageszeit, eine zweite Taste (22) für die Wahl des Datums, eine dritte Taste (23) für die Wahl der Temperatur innerhalb der Kühlvorrichtung, eine vierte Taste (24) für das Zurückstellen des RAM und eine fünfte Taste (25) sowie eine sechste Taste (26) für das Einstellen der Zeit bzw. des Datums aufweist.

49. Kühlvorrichtung nach einem der vorhergehenden Ansprüche, dadurch gekennzeichnet, daß die Schlüssel mit den charakterisierenden Darstellungen (1) in den Schlitz (27) eingeführt werden, der Identifikationscode der Schlüssel mit der charakterisierenden Darstellung (1) durch den Leser (11) gelesen wird, daß der Identifikationscode an den Mikroprozessor (30) weitergeleitet wird und daß der Mikroprozessor (30) feststellt, ob der Identifikationscode in dem RAM-Speicher (32) enthalten ist.

50. Kühlvorrichtung nach Anspruch 49, dadurch gekennzeichnet, daß dann, wenn der Identifikationscode nicht in dem RAM-Speicher (32) enthalten ist, der Mikroprozessor (30) diesem die maximale Aufbewahrungsdauer der Lebensmittelklasse zuordnet, die dem Identifikationscode entspricht, wozu er diese dem ROM-Speicher entnimmt, die gesamten Daten in dem RAM-Speicher (32) speichert und den Anzeigeblock (33) so steuert, daß er eine erste Folge von Symbolen wiedergibt und/oder den Vokalsyntheseblock (34) so steuert, daß er eine erste Folge von Worten ausspricht, wodurch die Eingabe, die Klasse und die fortlaufende Nummer des Paketes oder der Gruppe von Paketen von Lebensmitteln, die einem bestimmten Schlüssel mit charakterisierender Darstellung (1) zugeordnet ist, angegeben werden.

51. Kühlvorrichtung nach Anspruch 50, dadurch gekennzeichnet, daß dann, wenn der Identifikationscode bereits in dem RAM-Speicher (32) enthalten ist, der Mikroprozessor (30) die gesamten Daten in dem RAM-Speicher (32) löscht, in denen der Identifikationscode enthalten ist, und den Anzeigeblock (33) so steuert, daß er eine zweite Folge von Symbolen anzeigt und/oder den Vokalsyntheseblock (34) so steuert, daß er eine zweite Folge von Worten ausspricht, die die Entnahme, die Klasse und die fortlaufende Nummer des Paketes oder der Paketgruppe von Lebensmitteln, die einem bestimmten Schlüssel mit charakterisierender Darstellung (1) zugeordnet ist, angeben.

52. Kühlvorrichtung nach Anspruch 50, dadurch gekennzeichnet, daß der Mikroprozessor (30) alle 24 Stunden den Inhalt des RAM-Speichers (32) dadurch fortschreibt, daß er die Aufbewahrungsdauer aller in der Kühlvorrichtung enthaltenen Lebensmittel um eine Einheit verringert.

53. Kühlvorrichtung nach Anspruch 52, dadurch gekennzeichnet, daß durch Drücken der Suchtaste (16) der Mikroprozessor (30) den Anzeigeblock (33) und/oder den Vokalsyntheseblock (34) so steuert, daß in einer Sequenz der Inhalt des RAM-Speichers (32) angegeben wird, wobei mit den Gesamtdaten der Lebensmittel oder der Gruppe von Lebensmitteln, die ihrem Aufbewahrungsende am nächsten sind, begonnen wird und eine Fortsetzung erfolgt bis zu den jüngsten von allen Lebensmitteln, die in der Kühlvorrichtung enthalten sind.

54. Kühlvorrichtung nach Anspruch 52, dadurch gekennzeichnet, daß dann, wenn aufgrund des Zeitablaufs ein Lebensmittel oder eine Gruppe von Lebensmitteln, die in der Kühlvorrichtung enthalten sind, eine bestimmte Aufbewahrungsdauer erreicht hat, die dem Aufbewahrungsende angenähert ist, der Mikroprozessor (30) den Anzeigeblock (33) und/oder den Vokalsyntheseblock (34) so steuert, daß ein erstes Alarmsignal abgegeben wird.

55. Kühlvorrichtung nach Anspruch 54, dadurch gekennzeichnet, daß das erste Alarmsignal für eine bestimmte Zeit andauert, bis der Benutzer die Suchtaste (16) drückt, wobei dann der Mikroprozessor (30) den Anzeigeblock (33) so steuert, daß dieser eine dritte Sequenz von Symbolen abgibt und/oder den Vokalsyntheseblock (34) so steuert, daß dieser eine dritte Sequenz von Wörtern ausspricht, wodurch die noch für die Aufbewahrung zur Verfügung stehenden Tage, die Klasse und die fortlaufende Nummer des Paketes oder der Gruppe von Paketen von Lebensmitteln, die demnächst ablaufen, angegeben werden.

56. Kühlvorrichtung nach Anspruch 54, dadurch gekennzeichnet, daß die bestimmte, noch zur Verfügung stehende Aufbewahrungsdauer, nach der der Mikroprozessor (30) den Anzeigeblock (33) und/oder den Vokalsyntheseblock (34) steuert, um das erste Alarmsignal abzugeben, etwa eine Woche ist.

57. Kühlvorrichtung nach Anspruch 54, dadurch gekennzeichnet, daß dann, wenn der Benutzer das Lebensmittel oder die Gruppe von Lebensmitteln, die demnächst fällig werden, nicht aus der Kühlvorrichtung entnimmt, der Mikroprozessor (30) am folgenden Tag den Anzeigeblock (33) und/oder den Vokalsyntheseblock (34) so steuert, daß erneut das erste Alarmsignal abgegeben wird usw., bis zum Tag des tatsächlichen Ablaufs für das Lebensmittel oder die Gruppe der Lebensmittel.

58. Kühlvorrichtung nach Anspruch 57, dadurch gekennzeichnet, daß bei Ablauf für das Lebensmittel oder die Gruppe der Lebensmittel der Mikroprozessor (30) den Anzeigeblock (33) und/oder den Vokalsyntheseblock (34) so steuert, daß ein zweites Alarmsignal abgegeben wird, das lauter als das erste Alarmsignal ist.

59. Kühlvorrichtung nach den Ansprüchen 54 und 58, dadurch gekennzeichnet, daß das erste und das zweite Alarmsignal etwa um 12 Uhr mittags abgegeben werden.

60. Kühlvorrichtung nach den Ansprüchen 54 und 58, dadurch gekennzeichnet, daß das erste und das zweite Alarmsignal zu einer Tageszeit abgegeben werden, die vom Benutzer programmierbar ist.

61. Kühlvorrichtung nach Anspruch 36, dadurch gekennzeichnet, daß der Anzeigeblock (33) und/oder der Vokalsyntheseblock (34) normalerweise die Tageszeit angeben.

62. Kühlvorrichtung nach Anspruch 61, dadurch gekennzeichnet, daß der Anzeigeblock (33) und/oder der Vokalsyntheseblock (34) nach Drücken einer entsprechenden Taste das Datum angeben.

63. Kühlvorrichtung nach Anspruch 61, dadurch gekennzeichnet, daß der Anzeigeblock (33) und/oder der Vokalsyntheseblock (34) bei Drücken einer entsprechenden Taste die in der Kühlvorrichtung herrschende Temperatur angeben.

64. Kühlvorrichtung nach Anspruch 1, dadurch gekennzeichnet, daß die Mittel zur Informationsverarbeitung (30) mit Hilfe von zwei in der Kühlvorrichtung positionierten Temperatursonden einen hinsichtlich des Energieverbrauchs optimierten Betrieb der Kühlvorrichtung erlauben.

65. Kühlvorrichtung nach Anspruch 64, dadurch gekennzeichnet, daß eine der beiden Temperatursonden im Kühlraum der Kühlvorrichtung angeordnet ist, während die andere Sonde auf dem Verdampfer der Kühlvorrichtung positioniert ist, und daß beide Temperatursonden den Kompressor der Kühlvorrichtung so steuern, daß dieser eingeschaltet wird, wenn sie einen ersten Schwellenwert einer vorbestimmten Temperatur erreichen, während die im Kühlraum der Kühlvorrichtung angeordnete Sonde den Kompressor abschaltet, wenn ein zweiter Schwellenwert einer vorbestimmten Temperatur erreicht ist, und die auf dem Verdampfer der Kühlvorrichtung angeordnete Sonde den Kompressor abschaltet, wenn ein dritter Temperatur-Schwellenwert erreicht ist, der sowohl unterhalb des ersten als auch des zweiten Schwellenwertes liegt.

66. Kühlvorrichtung nach Anspruch 65, dadurch gekennzeichnet, daß dann, wenn neue, zu gefrierende Lebensmittel in die Kühlvorrichtung gegeben werden, die beiden Temperatursonden und der genannte Temperaturschwellenwert den Kompressor der Kühlvorrichtung veranlassen, für die gesamte Zeit zum Gefrieren des Lebensmittels kontinuierlich zu arbeiten.

67. Kühlvorrichtung nach Anspruch 66, dadurch gekennzeichnet, daß der Kompressor der Kühlvorrichtung auch kontinuierlich arbeitet, wenn ein Vorgefrierschalter (14) betätigt ist.

68. Kühlvorrichtung nach Anspruch 67, dadurch gekennzeichnet, daß der kontinuierliche Betrieb des Kompressors der Kühlvorrichtung fortgesetzt wird, bis der Raum in der Kühlvorrichtung einen vorbestimmten Temperaturschwellenwert erreicht, und daß dann, wenn der Raum der Kühlvorrichtung diesen Temperaturschwellenwert erreicht hat, eine Leuchtdiode (15) zu blinken beginnt.

69. Kühlvorrichtung nach Anspruch 68, dadurch gekennzeichnet, daß der vorbestimmte Temperaturschwellenwert etwa bei - 25° C liegt.

70. Kühlvorrichtung nach Anspruch 68, dadurch gekennzeichnet, daß dann, wenn nach einer bestimmten Anzahl von Stunden kontinuierlichen Betriebes des Kompressors der Kühlvorrichtung der vorbestimmte Temperaturschellenwert nicht erreicht ist, der Kompressor der Kühlvorrichtung abschaltet und die Leuchtdiode (15) zu blinken beginnt.

71. Kühlvorrichtung nach Anspruch 70, dadurch gekennzeichnet, daß die Anzahl der Betriebsstunden, nach denen der Kompressor der Kühlvorrichtung abschaltet, etwa bei zehn liegt.

| CLASS NUMBER | KINDS OF FOODS | DAYS OF KEEPING |
|:---:|:---|:---:|
| 1 | Fish and cooked foods | 60 |
| 2 | Sausages, crustacean, edible sea molluscs and sea urchins | 90 |
| 3 | Duck, goose, sauces | 120 |
| 4 | Pork, salt meat, tomatoes, bread | 180 |
| 5 | Turkey | 210 |
| 6 | Lamb, butter, cheese | 240 |
| 7 | Beef, chicken, rabbit, game, eggs | 300 |
| 8 | Fruit, vegetables | 360 |

FIG 1

FIG 2

FIG 3

FIG 3a  FIG 3b  FIG 3c  FIG 3d  FIG 3e

FIG 4

FIG 5